# EUROPÄISCHE PATENTSCHRIFT

(11) **EP 1 583 683 B1**
(45) Veröffentlichungstag und Bekanntmachung des Hinweises auf die Patenterteilung: **28.02.2007**
(21) Anmeldenummer: 03785825.5
(22) Anmeldetag: 16.12.2003
(51) Int. Cl.: B62D 27/06, F16B 9/02

(54) **ANORDNUNG ZUM VERBINDEN EINES ROHRFÖRMIGEN ERSTEN BAUTEILS MIT EINEM ZWEITEN BAUTEIL**
ASSEMBLY FOR CONNECTING A TUBULAR FIRST COMPONENT TO A SECOND COMPONENT
ENSEMBLE POUR RACCORDER UNE PREMIERE PIECE TUBULAIRE UNE DEUXIEME PIECE

(30) Priorität: 13.01.2003 DE 10301018
(43) Veröffentlichungstag der Anmeldung: 12.10.2005
(73) Patentinhaber: Progress-Werk Oberkirch Aktiengesellschaft, 77704 Oberkirch (DE)
(72) Erfinder: SCHMIEDER, Hansjörg, 77704 Oberkirch-Zusenhofen (DE); MAYER, Franz, 77704 Oberkirch (DE); SCHINDLER, Klaus, 77871 Renchen (DE)
(74) Vertreter: Heuckeroth, Volker
(86) Internationale Anmeldenummer: PCT/EP2003/014276
(87) Internationale Veröffentlichungsnummer: WO 2004/062987

(56) Entgegenhaltungen:
- WO-A1-20/04005116
- DE-A- 10 003 981
- DE-A- 19 741 551
- DE-U- 20 017 234

## Beschreibung

Die Erfindung betrifft eine Anordnung zum verbinden eines rohrförmigen ersten Bauteils mit einem zweiten Bauteil, insbesondere zum Verbinden eines zugrohrs mit einer A-Säule einer Fahrzeugkarosserie, mit einem einer Aufnahme für ein Schraubelement bildenden ersten Bauelement, das an einem dem zweiten Bauteil zugewandten Ende des ersten Bauteils angeordnet ist.

Die Erfindung betrifft ferner ein verfahren zum Herstellen einer solchen Anordnung.

Eine Anordnung der eingangs genannten Art ist aus DE-A-197 41 551 bekannt.

Im Sinne der vorliegenden Erfindung sind die Begriffe "rohrförmiges erstes Bauteil" und "zweites Bauteil" allgemein zu verstehen. Bei dem ersten Bauteil kann es sich um ein Profil, insbesondere um ein Hohlprofil handeln, das in Umfangsrichtung einen vollumfänglich geschlossenen Mantel oder auch einen teilweise offenen Mantel aufweist. Im letzteren Fall kann das erste Bauteil beispielsweise ein U- oder C-Profil oder auch allgemein ein Rechteckprofil sein. Das erste Bauteil kann üblicherweise ein Rohr mit kreisförmigem geschlossenem Umfang sein. Das zweite Bauteil kann beispielsweise ein Profil oder eine Platte sein.

Ein spezieller Anwendungsfall der eingangs genannten Anordnung betrifft die Verbindung eines Zugrohrs mit einer A-Säule eines Kraftfahrzeugs. Bei Kraftfahrzeugen verläuft üblicherweise zwischen den im Wesentlichen vertikalen A-Säulen ein horizontaler Querträger, an dem u.a. die Instrumententafel befestigt ist. Zusätzlich zu dem die Instrumententafel tragenden Querträger kann unterhalb des Querträgers ein Zugrohr zwischen den beiden A-Säulen verspannt werden. Das zusätzliche Zugrohr kann beispielsweise dazu dienen, in einem Crash-Fall ein Abknicken der A-Säulen nach außen zu vermeiden.

Bei der Verbindung eines Zugrohrs mit den A-Säulen eines Kraftfahrzeugs ergeben sich verschiedene Problemstellungen.

Dabei bestehen die wesentlichen Problemstellungen in aufgrund von Fertigungsungenauigkeiten herrschenden Toleranzen, in dem Erfordernis einer im Falle eines Crashs auftretenden hohen Zugkräften standhaltenden Verbindung zwischen dem Zugrohr und den A-Säulen, sowie in einer bei Kraftfahrzeugen stets geforderten kostengünstigen Bauweise der Strukturelemente der Karosserie.

Die Fertigungstoleranzen können sich in einem von Fahrzeug zu Fahrzeug desselben Fahrzeugtyps nicht konstanten Abstand zwischen den A-Säulen äußern. Diese Toleranzen wirken sich demnach in Längsrichtung des Zugrohrs aus. Aber auch in Richtungen quer zur Längsrichtung des Zugrohrs können Fertigungstoleranzen die Verbindung zwischen dem Zugrohr und den A-Säulen erschweren, beispielsweise wenn die an den A-Säulen vorgesehenen Befestigungsabschnitte für das Zugrohr von A-Säule zu A-Säule nicht exakt miteinander fluchten, sondern einen Achsen- oder Winkelversatz aufweisen.

Zum Ausgleich von Toleranzen in Längsrichtung des Zugrohrs sind, wie beispielsweise in dem oben genannten Dokument DE 197 41 551 A1, Verbindungselemente zum Verbinden eines zugrohrs mit den A-Säulen eines Kraftfahrzeugs vorgeschlagen worden, mit denen ein variabler Längenausgleich ermöglicht wird, wenn die Länge des zugrohrs kleiner als der Abstand zwischen den A-Säulen ist. Diese bekannten Verbindungselemente weisen ein radial spreizbares Bauelement auf, das in das Zugrohr eingeführt und durch Anziehen einer Schraubverbindung radial gegen die Innenwand des Zugrohrs gespreizt wird. Vor dem Verklemmen wird ein axial bewegliches Distanzstück des Verbindungselementes gegen die A-Säule bewegt, um den Längenausgleich zu bewerkstelligen. Bei diesen bekannten verbindungselementen hat es sich als problematisch erwiesen, dass die Klemmkraft zwischen dem radial spreizbaren Klemmstück und dem zugrohr bei hohen in Längsrichtung des Zugrohrs wirkenden Zugkräften nicht ausreicht, um ein Abziehen des Zugrohrs von dem Klemmstück sicher zu verhindern. Darüber hinaus sind diese bekannten verbindungselemente in ihrer Herstellung aufwändig und mit höheren Kosten verbunden.

Aus dem nachveröffentlichten Dokument WO 2004/005116 A ist eine Anordnung zum Verbinden eines rohrförmigen ersten Bauteils mit einem zweiten Bauteil, insbesondere zum Verbinden eines Zugrohrs mit einer A-Säule einer Fahrzeugkarosserie bekannt, mit einem eine Aufnahme für ein Schraubelement bildenden ersten Bauelement, das an einem dem zweiten Bauteil zugewandten Ende des ersten Bauteils angeordnet ist, und mit einem zweiten Bauelement, das an dem dem zweiten Bauteil zugewandten Ende des ersten Bauteils derart befestigt ist, dass das erste Bauelement zwischen dem ersten Bauteil und dem ersten Bauelement gehalten ist, und das Schraubelement von dem zweiten Bauelement in dem ersten Bauelement unverlierbar gehalten ist, wobei das Schraubelement in dem ersten Bauelement zumindest in einer Richtung der zu einer Längsrichtung des ersten Bauteils für einen Toleranzausgleich beim Verbinden des ersten Bauteils mit dem zweiten Bauteil beweglich ist. Das Schraubelement ist in dem ersten Bauelement in beliebigen Richtungen einer Ebene quer zu Längsrichtung des ersten Bauteils beweglich.

Der Erfindung liegt die Aufgabe zugrunde, eine Anordnung der eingangs genannten Art bereitzustellen, die eine einfache Bauweise besitzt und somit kostengünstig herstellbar ist, die eine hohen Zugkräften standhaltende verbindung des ersten Bauteils mit dem zweiten Bauteil gewährleistet, und die Toleranzen beim Verbinden des ersten Bauteils mit dem zweiten Bauteil ausgleichen kann.

Erfindungsgemäß wird diese Aufgabe hinsichtlich der eingangs genannten Anordnung dadurch gelöst, dass ein zweites Bauelement vorgesehen ist, das an dem dem zweiten Bauteil zugewandten Ende des ersten Bauteils derart befestigt ist, dass das erste Bauelement zwischen dem ersten Bauteil und dem zweiten Bauelement gehalten ist, wobei das erste Bauelement zwischen dem ersten Bauteil und dem zweiten Bauelement eingeklemmt bzw. eingefasst ist, und das Schraubelement von dem zweiten Bauelement in dem ersten Bauelement unverlierbar gehalten ist, wobei das Schraubelement in dem ersten Bauelement zumindest in einer Richtung quer zu einer Längsrichtung des ersten Bauteils für einen Toleranzausgleich beim Verbinden des ersten Bauteils mit dem zweiten Bauteil beweglich ist.

Der Erfindung liegt weiterhin die Aufgabe zugrunde, ein kostengünstiges Verfahren zum Herstellen einer solchen Anordnung anzugeben.

Diese Aufgabe wird durch ein Verfahren zur Herstellung einer Anordnung zum Verbinden eines rohrförmigen ersten Bauteils mit einem zweiten Bauteil, insbesondere zum Verbinden eines Zugrohrs mit einer A-Säule einer Fahrzeugkarosserie, gelöst, mit den Schritten:
- Bereitstellen des ersten Bauteils;
- Bereitstellen eines eine Aufnahme für ein Schraubelement bildenden ersten Bauelements;
- Einlegen des Schraubelements in das erste Bauelement;
- Bereitstellen eines zweiten Bauelements;
- Anordnen des ersten Bauelements und des zweiten Bauelements an einem dem zweiten Bauteil zugewandten Ende des ersten Bauteils;
- Befestigen des zweiten Bauelements an dem dem zweiten Bauteil zugewandten Ende des ersten Bauteils derart, dass das erste Bauelement zwischen dem ersten Bauteil und dem zweiten Bauelement gehalten wird, wobei das erste Bauelement zwischen dem ersten Bauteil und dem zweiten Bauelement eingeklemmt bzw. eingefasst wird, und das Schraubelement von dem zweiten Bauelement in dem ersten Bauelement unverlierbar gehalten wird, wobei das Schraubelement in dem ersten Bauelement zumindest in einer Richtung quer zu einer Längsrichtung des ersten Bauteils für einen Toleranzausgleich beim Verbinden des ersten Bauteils mit dem zweiten Bauteil beweglich ist.

Die erfindungsgemäße Anordnung schafft einen Toleranzausgleich bei der Verbindung des ersten Bauteils mit dem zweiten Bauteil dadurch, dass an dem dem zweiten Bauteil zugewandten Ende des ersten Bauteils ein erstes Bauelement angeordnet ist, das als Aufnahme für ein Schraubelement dient, das in dem ersten Bauelement zumindest in einer Richtung quer zur Längsachse des ersten Bauteils beweglich ist. Im Falle der Anwendung der erfindungsgemäßen Anordnung zum Verbinden eines Zugrohrs mit den A-Säulen eines Kraftfahrzeugs kann somit ein Achsen- oder Winkelversatz zwischen den Befestigungsabschnitten der gegenüberstehenden A-Säulen ausgeglichen werden. Die erfindungsgemäße Anordnung gewährleistet außerdem eine hohen, in Längsrichtung des ersten Bauteils wirkenden Zugkräften standhaltende Verbindung des ersten Bauteils mit dem zweiten Bauteil, indem das zweite Bauelement an dem ersten Bauteil befestigt, beispielsweise mit dem ersten Bauteil verschweißt ist, und das Schraubelement zwischen sich und dem ersten Bauelement unverlierbar hält. Im Unterschied zu den bekannten Verbindungselementen werden bei der erfindungsgemäßen Anordnung keine radial spreizbaren Klemmstücke verwendet, die von dem ersten Bauteil abrutschen können. Darüber hinaus sind die erfindungsgemäße Anordnung und das Verfahren zu ihrer Herstellung besonders kostengünstig, weil das erste Bauelement selbst nicht an dem ersten Bauteil, beispielsweise durch Schweißen oder Kleben, befestigt werden muss, sondern nur das zweite Bauelement, das an dem ersten Bauteil derart befestigt wird, dass es das erste Bauelement an dem ersten Bauteil fest hält, wodurch bei der Herstellung der Anordnung ein Arbeitsschritt eingespart wird, nämlich derjenige einer separaten Befestigung der Schraubelementaufnahme an dem ersten Bauteil.

Dabei ist das erste Bauelement zwischen dem ersten Bauteil und dem zweiten Bauteil eingeklemmt bzw. eingefasst ist.

Hierbei ist von Vorteil, dass das erste Bauelement auf einfache und sichere Weise formschlüssig zwischen dem zweiten Bauelement und dem ersten Bauteil sicher gehalten ist, ohne dass es eines kosten- und zeitaufwendigen weiteren Arbeitsschrittes wie Schweißen oder Kleben bedarf, um das erste Bauelement an dem ersten Bauteil festzulegen.

Es versteht sich jedoch, dass das erste Bauelement nach der Herstellung der Anordnung ebenfalls an dem ersten Bauteil befestigt sein kann, was beispielsweise mehr oder weniger automatisch beim Befestigen, beispielsweise Anschweißen des zweiten Bauelements an dem Ende des ersten Bauteils erfolgen kann, wenn beispielsweise ein Teil des Schweißmaterials verläuft und dabei das erste Bauelement mit dem ersten Bauteil und/oder dem zweiten Bauelement fest verbindet. Eine solche Befestigung des ersten Bauelements an dem ersten Bauteil ist jedoch nicht zwingend erforderlich, da ja bereits das zweite Bauelement das erste Bauelement an dem ersten Bauteil festhält. So kann das erste Bauelement auch vollständig ohne eine stoffschlüssige Verbindung wie durch Schweißen oder Kleben, d.h. allein durch Haltekraft durch das zweite Bauelement, an dem ersten Bauteil fixiert sein.

Vor der Verbindung des ersten Bauteils mit dem zweiten Bauteil wird die Baueinheit aus dem ersten Bauteil, dem ersten Bauelement, dem Schraubelement und dem zweiten Bauelement vorteilhafterweise als Baueinheit vorgefertigt. So können im Fall der Anwendung der erfindungsgemäßen Anordnung zum Verbinden eines Zugrohrs mit den A-Säulen eines Fahrzeugs zunächst an beiden Endes des Zugrohrs jeweils ein erstes Bauelement mit jeweils darin aufgenommenem Schraubelement und mit an dem Zugrohr befestigten zweiten Bauelement als Baueinheit vorgefertigt werden, wobei das Schraubelement, beispielsweise eine Mutter oder Schraube, dann bereits unverlierbar, aber beweglich in dem ersten Bauelement gehalten ist, was einen weiteren Vorteil bei der nachfolgenden Montage des ersten Bauteils an dem zweiten Bauteil darstellt.

In einer bevorzugten Ausgestaltung der Anordnung ist das Schraubelement in dem ersten Bauelement in beliebigen Richtungen in einer Ebene quer zur Längsrichtung des ersten Bauteils beweglich.

Hierbei ist von vorteil, dass die erfindungsgemäße Anordnung Toleranzen in allen Richtungen in der Ebene quer zur Längsrichtung des ersten Bauteils ausgleichen kann.

In einer weiteren bevorzugten Ausgestaltung der Anordnung ist das erste Bauelement von dem zweiten Bauelement im wesentlichen verdrehgesichert an dem ersten Bauteil gehalten.

Da das erste Bauelement mit dem ersten Bauteil nicht fest verbunden, beispielsweise verschweißt oder verklebt sein muss, hat diese Maßnahme den Vorteil, dass sich das erste Bauelement beim verschrauben des in dem ersten Bauelement aufgenommenen Schraubelements mit einem komplementären Schraubelement nicht unerwünscht dreht und ein Verschrauben der beiden Schraubelemente erschwert oder den Einsatz von zusätzlichen Werkzeugen erfordert. Diese verdrehsicherung kann dadurch bewerkstelligt werden, dass das erste Bauelement mit dem zweiten Bauelement stoffschlüssig verbunden wird, oder wie in einer nachfolgenden bevorzugten Ausgestaltung noch beschrieben wird, durch eine formschlüssige Verbindung zwischen dem ersten Bauelement und dem zweiten Bauelement.

In einer weiteren bevorzugten Ausgestaltung weist das erste Bauelement zumindest einen sich quer zur Längsrichtung des ersten Bauteils erstreckenden Flansch auf, der stirnseitig auf einem Rand des ersten Bauteils aufliegt und von dem zweiten Bauelement gegen den Rand gehalten wird.

Hierbei ist von Vorteil, dass das erste Bauelement, das das Schraubelement aufnimmt, auf konstruktiv einfache weise und ohne das Erfordernis einer stoffschlüssigen Verbindung des ersten Bauelements mit dem ersten Bauteil und auch ohne das Erfordernis einer stoffschlüssigen Verbindung des ersten Bauelements mit dem zweiten Bauelement in Längsrichtung des ersten Bauteils fixiert ist. Mit anderen Worten ist das erste Bauelement gegen ein verschieben in das Bauteil hinein und auch gegen ein Abziehen von dem ersten Bauteil gesichert, ohne dass hierzu radial wirkende Klemmkräfte eingesetzt werden, die hohen Zugbelastungen weniger gut standhalten.

In einer weiteren bevorzugten Ausgestaltung ist auf einer dem ersten Bauelement zugewandten Seite des zweiten Bauelements oder an dem Rand des ersten Bauteils eine Ausnehmung vorhanden, in der der Flansch des ersten Bauelements aufgenommen ist.

Wenn die Ausnehmung in dem zweiten Bauelement vorgesehen ist, hat dies den Vorteil, dass das zweite Bauelement deckelartig den Flansch des ersten Bauelements zwischen dem Rand des ersten Bauteils einfasst, was eine sichere Fixierung des ersten Bauelements an dem ersten Bauteil gewährleistet. Der weitere Vorteil dieser Maßnahme besteht darin, dass das erste Bauelement mit darin aufgenommenem Schraubelement und das zweite Bauelement vor der Anordnung an dem Ende des ersten Bauteils zusammengefügt werden können, und zwar auch ohne eine Befestigung wie durch Schweißen oder Kleben, indem beispielsweise an dem zumindest einen Flansch des ersten Bauelements seitliche Vorsprünge ausgebildet sind, durch die der Flansch mit der Ausnehmung zumindest so verrastet werden kann, dass das erste Bauelement von dem zweiten Bauelement nicht leicht abfallen kann.

Während es im Rahmen einer der zuvor beschriebenen Ausgestaltungen, wonach an dem ersten Bauelement ein sich quer zur Längsrichtung des ersten Bauteils erstreckender Flansch vorgesehen ist, möglich ist, dass sich der Flansch vollumfänglich an dem ersten Bauelement erstreckt, ist es in einer weiteren bevorzugten Ausgestaltung vorgesehen, dass sich der Flansch an dem ersten Bauelement nur teilumfänglich erstreckt.

Hierbei ist von Vorteil, dass das erste Bauelement mit geringerem Materialaufwand hergestellt werden kann.

In Zusammenhang mit einer weiteren bevorzugten Ausgestaltung, wonach sich die vorstehend beschriebene Ausnehmung in dem zweiten Bauelement nur teilumfänglich erstreckt, wird der weitere Vorteil erreicht, dass das erste Bauelement über den in die teilumfängliche Ausnehmung eingreifenden Flansch gleichzeitig an dem zweiten Bauelement verdrehgesichert ist, und über die Befestigung des zweiten Bauelements an dem ersten Bauteil wird somit auch eine konstruktiv einfache Verdrehsicherung des ersten Bauelements gegenüber dem ersten Bauteil geschaffen.

In diesem Zusammenhang ist bei einer konstruktiv bevorzugten Ausgestaltung der Anordnung vorgesehen, dass das erste Bauelement zumindest zwei sich teilumfänglich erstreckende Flansche aufweist, die in Umfangsrichtung voneinander beabstandet sind, vorzugsweise um etwa 180°.

In einer weiteren bevorzugten Ausgestaltung weist das erste Bauelement zumindest einen sich quer zur Längsrichtung des ersten Bauteils erstreckenden Basisabschnitt auf, der in das erste Bauteil eintaucht, wobei sich von dem Basisabschnitt ein in Längsrichtung des ersten Bauteils zum Ende des ersten Bauteils hin erstreckender Längsabschnitt weg erstreckt, an dessen dem Basisabschnitt gegenüberliegenden Ende der Flansch angeordnet ist.

Diese Maßnahme hat den Vorteil, dass das erste Bauelement in der Art eines Käfigs ausgebildet ist, in dem das Schraubelement beweglich aufgenommen werden kann, und der als sehr kostengünstiges Bauteil mit geringem Materialaufwand hergestellt werden kann. Wenn sich, wie in einer zuvor beschriebenen Ausgestaltung vorgesehen ist, der zumindest eine Flansch nur teilumfänglich an dem ersten Bauelement erstreckt, erstreckt sich auch der zumindest eine Längsabschnitt des ersten Bauelements nur über einen Teilumfang, und zwar vorzugsweise über den gleichen Teilumfang wie der zumindest eine Flansch.

In einer weiteren bevorzugten Ausgestaltung ist das Schraubelement in dem ersten Bauelement verdrehgesichert aufgenommen.

Hierbei ist von Vorteil, dass beim Verbinden des ersten Bauteils mit dem zweiten Bauteil durch Verschrauben eines komplementären Schraubelements mit dem in dem ersten Bauelement aufgenommenen Schraubelement letzteres nicht durch ein Werkzeug drehfest gehalten werden muss, was das Verbinden des ersten Bauteils mit dem zweiten Bauteil wesentlich vereinfacht. Die Verdrehsicherung des Schraubelements in dem ersten Bauelement kann beispielsweise dadurch realisiert werden, dass der zuvor erwähnte zumindest Längsabschnitt an dem ersten Bauelement als Drehanschlag für das Schraubelement dient.

In einer weiteren bevorzugten Ausgestaltung des erfindungsgemäßen Verfahrens wird vor dem Befestigen des zweiten Bauelements an dem Ende des ersten Bauteils das erste Bauelement mit zumindest einem Flansch in zumindest eine Ausnehmung des zweiten Bauelements eingelegt.

Auf diese Weise wird vorteilhafterweise eine Vormontage des ersten Bauelements mit darin aufgenommenem Schraubelement an dem zweiten Bauelement vorgenommen, wonach diese Gesamtanordnung dann an dem Ende des ersten Bauteils befestigt wird, wodurch das Herstellungsverfahren mit sehr geringem Zeitaufwand durchgeführt werden kann, weil nämlich eine Einzelbefestigung des ersten und zweiten Bauelements am ersten Bauteil bzw. des ersten Bauelements am zweiten Bauelement nicht erforderlich ist. Insbesondere ist es, wie bereits oben beschrieben, vorteilhaft, wenn das erste Bauelement und das zweite Bauelement so vormontiert werden können, und zwar ohne stoffschlüssig miteinander verbunden zu werden, dass das erste Bauelement und das zweite Bauelement in der Art einer Steckverbindung aneinander fixiert sind.

Weitere Vorteile und Merkmale ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine Anordnung zum Verbinden eines rohrförmigen ersten Bauteils mit einem ebenfalls dargestellten zweiten Bauteil im Längsschnitt, wobei das erste Bauteil und das zweite Bauteil nur ausschnittsweise dargestellt sind;
- Fig. 2: die Anordnung in Fig. 1 in Alleinstellung;
- Fig. 3: eine Ansicht der Anordnung in Fig. 2 in Richtung des Pfeils III; und
- Fig. 4: eine Ansicht der Anordnung in Fig. 2 in Richtung des Pfeils IV in Fig. 2.

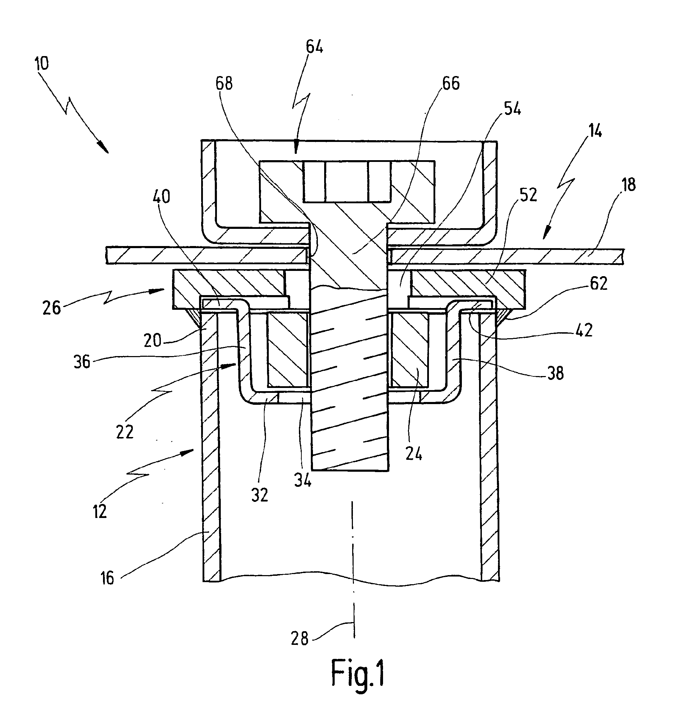

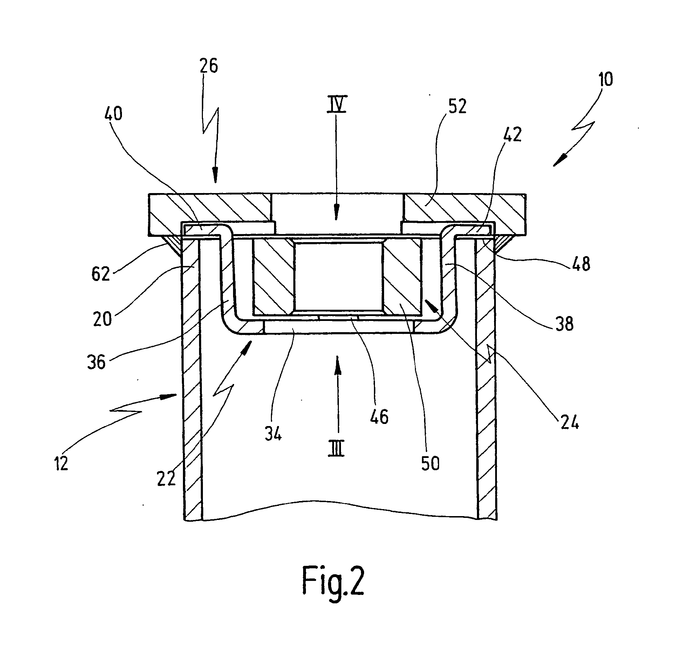

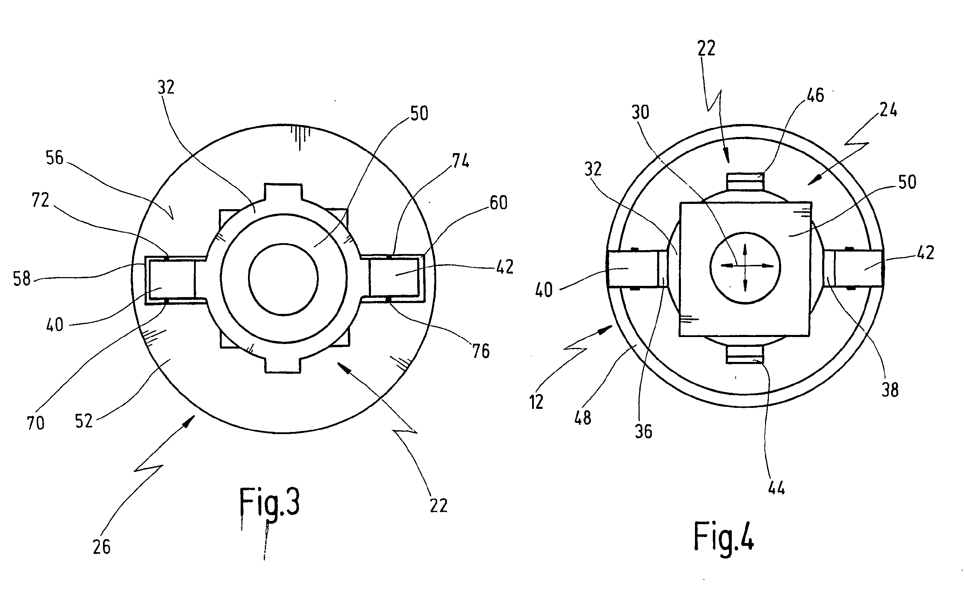

In Figuren 1 und 2 ist eine mit dem allgemeinen Bezugszeichen 10 versehene Anordnung zum Verbinden eines rohrförmigen ersten Bauteils 12 mit einem zweiten Bauteil 14 dargestellt. Weitere Einzelheiten der Anordnung 10 sind in Figuren 3 und 4 dargestellt.

Das erste Bauteil 12, das in Figuren 1 und 2 nur ausschnittsweise dargestellt ist, ist im vorliegenden Ausführungsbeispiel ein Zugrohr 16, und das zweite Bauteil 14, das ebenfalls ausschnittsweise dargestellt ist, ist in dem gezeigten Ausführungsbeispiel eine A-Säule 18 einer Fahrzeugkarosserie.

Es versteht sich, dass das Zugrohr 16 an seinem gegenüberliegenden, nicht dargestellten Ende auf die gleiche Weise ausgestaltet sein kann, um dieses Ende mit der der A-Säule 18 gegenüberliegenden A-Säule zu verbinden.

Das erste Bauteil 12 weist ein dem zweiten Bauteil 14 zugewandtes Ende 20 auf. Im Bereich des Endes 20 ist das erste Bauteil 12 rohrförmig ausgebildet und weist im gezeigten Ausführungsbeispiel einen kreisförmigen Querschnitt auf, bzw. ist zylindrisch ausgebildet.

An dem Ende 20 des Zugrohrs 16 ist ein erstes Bauelement 22 angeordnet, das als Aufnahme für ein erstes Schraubelement 24 dient.

Ein zweites Bauelement 26 ist an dem ersten Bauteil 12, genauer gesagt an dessen Ende 20 derart befestigt, dass das erste Bauelement 22 zwischen dem ersten Bauteil 12 und dem zweiten Bauelement 26 festgehalten ist. Dabei kann das erste Bauelement 22 mit dem ersten Bauteil 12 fest verbunden sein. Eine solche stoffschlüssige Verbindung des ersten Bauelements 22 kann jedoch auch fehlen, da das zweite Bauelement 26 das erste Bauelement 22 in einer Art Sandwich-Anordnung an dem ersten Bauteil 12 festhält.

Zwischen dem ersten Bauelement 22 und dem zweiten Bauelement 26 ist das erste Schraubelement 24 unverlierbar gehalten, ist jedoch in dem ersten Bauelement 22 in beliebigen Richtungen in einer Ebene quer zur Längsrichtung 28 des ersten Bauteils 12 beweglich, wie in Fig. 4 mit einem Doppelpfeilkreuz 30 angedeutet ist.

Zusätzlich mit Bezug auf Figuren 3 und 4 werden das erste Bauelement 22, das erste Schraubelement 24 und das zweite Bauelement 26 nachfolgend näher beschrieben.

Das erste Bauelement 22 weist einen Basisabschnitt 32 auf, der in das Ende 20 des ersten Bauteils 12 eintaucht. Der Basisabschnitt 32 ist im Wesentlichen ringförmig ausgebildet und weist in der Mitte eine Öffnung 34 auf.

Von dem Basisabschnitt 32 erstrecken sich zum Ende 20 des ersten Bauteils 12 hin zwei erste Längsabschnitte 36 und 38, die im Wesentlichen parallel zur Längsrichtung 28 des ersten Bauteils 12 verlaufen, während der Basisabschnitt 32 im wesentlichen quer zur Längsrichtung 28 angeordnet ist. Die Längsabschnitte 36 und 38 können auch schräg zur Längsrichtung 28 des ersten Bauteils 12 verlaufen, was ebenfalls unter "im wesentlichen parallel" verstanden wird.

Die Längsabschnitte 36 und 38 sind um etwa 180° zueinander versetzt an dem Basisabschnitt 32 angeordnet und mit diesem einstückig verbunden. Dabei erstrecken sich die Längsabschnitte 36 und 38 in Umfangsrichtung gesehen nur über einen Teilumfang.

An seinem dem Basisabschnitt 32 abgewandten Ende weist der Längsabschnitt 36 einen sich radial nach außen erstreckenden Flansch 40 auf, und der Längsabschnitt 38 weist einen dem Flansch 40 entgegengesetzt gerichteten Flansch 42 auf.

Zwei weitere Längsabschnitte 44 und 46, die bezüglich der Längsabschnitte 36 und 38 um 90° zu Letzteren versetzt angeordnet sind, erstrecken sich ebenfalls von dem Basisabschnitt 32 weg zum Ende 20 des ersten Bauteils 12 hin. Die Längsabschnitte 44 und 46 weisen jedoch an ihrem dem Basisabschnitt 32 abgewandten Ende keine sich radial erstreckende Flansche auf.

Das gesamte erste Bauelement 22 ist mit allen zuvor beschriebenen Abschnitten und Flanschen einstückig ausgebildet.

Die Flansche 40 und 42 des ersten Bauelements 22 liegen auf einem Rand 48 am Ende 20 des ersten Bauteils 12 auf.

Das erste Schraubelement 24 ist in Form einer Mutter 50 ausgebildet, deren Außenumfang einen Vierkant bildet, so dass das erste Schraubelement 24 in dem ersten Bauelement 22 durch die Längsabschnitte 36, 38, 44 und 46 verdrehgesichert ist, da die Diagonalen der Mutter 50 länger sind als der Abstand gegenüberliegender Längsabschnitte 36 und 38 bzw. 44 und 46. "Verdrehgesichert" bedeutet, dass sich die Mutter 50 zumindest nicht um 360° um ihre Längsachse in dem Bauelement 22 drehen lässt. Andererseits ist das erste Schraubelement 24 in dem ersten Bauelement 22 in einer Ebene quer zur Längsrichtung 28 des ersten Bauteils 12 gemäß dem Doppelpfeilkreuz 30 beweglich, wodurch bei der Verbindung des ersten Bauteils 12 mit dem zweiten Bauteil 14 ein Toleranzausgleich in beliebigen Richtungen quer zur Längsrichtung 28 des ersten Bauteils 12 geschaffen wird.

Das zweite Bauelement 26 ist in Form einer Deckplatte 52 ausgebildet, die mittig eine durchgehende Bohrung 54 aufweist, deren Durchmesser kleiner ist als der größte Durchmesser des ersten Schraubelements 24, so dass das Schraubelement 24 zwischen dem zweiten Bauelement 26 und dem ersten Bauelement 22 in beiden Richtungen parallel zur Längsrichtung 28 des ersten Bauteils 12 unverlierbar gehalten ist.

Auf seiner dem ersten Bauelement 22 zugewandten Seite 56 weist das zweite Bauelement 26 eine erste Ausnehmung 58 und eine zweite Ausnehmung 60 auf, die in Form von sich radial erstreckenden flachen Nuten ausgebildet sind, in denen die Flansche 40 und 42 des ersten Bauelements 22 formschlüssig aufgenommen sind, wodurch das erste Bauelement 22 an dem zweiten Bauelement 26 verdrehgesichert ist. Auch die Ausnehmungen 58 und 60 erstrecken sich wie die Flansche 40 und 42 nur teilumfänglich.

Die Deckplatte 52, die das zweite Bauelement 26 bildet, weist einen geringfügig größeren Außendurchmesser als das Ende 20 des ersten Bauteils 12 auf, so dass das zweite Bauelement 26 den Rand 48 des ersten Bauteils 12 geringfügig überragt.

Im fertig montierten Zustand der Anordnung 10 gemäß Fig. 1 ist das zweite Bauelement 26 am Ende 20 des ersten Bauteils 12 unlösbar befestigt, beispielsweise mit einer umlaufenden Schweißnaht 62. In diesem Zustand ist das erste Bauelement 22 mittels der Flansche 40 und 42 zwischen dem zweiten Bauelement 26 und dem ersten Bauteil 12 eingefasst bzw. eingeklemmt, und ist dabei im gezeigten Ausführungsbeispiel weder mit dem ersten Bauteil 12 noch mit dem zweiten Bauteil 26 fest verbunden, sondern wird allein durch Formschluss von dem zweiten Bauelement 26 gegen das erste Bauelement 12 gehalten. Dabei ist das erste Bauelement 22 gegenüber dem ersten Bauteil 12 verdrehgesichert. Die Schweißnaht 62 kann allerdings bei ihrer Anbringung auch das erste Bauelement 22 am ersten Bauteil 12 und/oder am zweiten Bauelement 26 stoffschlüssig fixieren, zumindest teilweise, wenn ein Teil des Schweißmaterials in die Nahtstelle hinein fließt.

Nachfolgend wird ein Verfahren zum Herstellen der Anordnung 10 beschrieben.

Zunächst wird das erste Bauteil 12 und das erste Bauelement 22 bereitgestellt. Anschließend wird das erste Schraubelement 24 in das erste Bauelement 22 eingelegt.

Danach wird das erste Bauelement 22 mit den Flanschen 40 und 42 in die Ausnehmungen 58, 60 des zweiten Bauelements 26 eingelegt. Eine gewisse Fixierung des ersten Bauelements 22 an dem zweiten Bauelement 26 kann dadurch erreicht werden, dass an den Flanschen 40 und 42 beispielsweise, wie in Fig. 3 dargestellt ist, Vorsprünge 70, 72 bzw. 74, 76 vorhanden sind, die in der Art von Rastnasen wirken und bewirken, dass sich beim Eindrücken der Flansche 40 und 42 in die Ausnehmungen 58 und 60 die Flansche 40 und 42 in den Ausnehmungen 58 und 60 einklemmen, derart, dass das zweite Bauelement 22 mit dem darin aufgenommenen Schraubelement 24 von dem zweiten Bauelement 26 nicht abfallen kann, wenn die Anordnung aus zweitem Bauelement 26 und erstem Bauelement 22 an das Ende 20 des ersten Bauteils 12 angesetzt wird.

Das zweite Bauelement 26 mit dem ersten Bauelement 22 wird an dem Ende 20 des ersten Bauteils 12 wie in Fig. 2 dargestellt angeordnet. Anschließend wird das zweite Bauelement 26 an dem ersten Bauteil 12 befestigt, derart, dass das erste Bauelement 22 von dem zweiten Bauelement 26 gegen das erste Bauteil 12 in der Längsrichtung 18 des ersten Bauteils 12 gehalten wird, und das erste Schraubelement 24 in dem ersten Bauelement 22 unverlierbar gehalten ist.

Zum Verbinden des ersten Bauteils 12 mit der so vormontierten Anordnung 10 mit dem zweiten Bauteil 14 wird ein zweites Schraubelement 64, das entsprechend als Schraube 66 ausgebildet ist, durch eine entsprechende Öffnung 68 in dem zweiten Bauteil 14 durchgeführt und mit dem ersten Schraubelement 24 verschraubt, wodurch sich das erste Schraubelement 24 gegen das zweite Bauelement 26 und das erste Bauteil 12 somit gegen das zweite Bauteil 14 zieht. Da das erste Schraubelement 24 in dem ersten Bauelement 22 in der Ebene quer zur Längsrichtung 28 beweglich ist, können beim Verbinden des ersten Bauteils 12 mit dem zweiten Bauteil 14 Toleranzen aufgrund eines unbeabsichtigten Achsenversatzes relativ zu dem nicht dargestellten gegenüberliegenden Ende des ersten Bauteils 12 bzw. einem entsprechenden gegenüberliegenden zweiten Bauteil ausgeglichen werden.

In Abwandlung des gezeigten Ausführungsbeispiels kann das erste Schraubelement 24 in dem ersten Bauelement 22 auch eine Schraube sein, deren Kopf ebenfalls beispielsweise als Vierkant wie die Mutter 50 ausgebildet sein kann, wodurch diese Schraube dann in dem ersten Bauelement 22 verdrehgesichert aufgenommen wäre. Der Schaft dieser Schraube würde dann vor dem Verbinden des ersten Bauteils 12 mit dem zweiten Bauteil 14 aus der Öffnung 54 des zweiten Bauelements 26 vorragen, so dass beim Verbinden des ersten Bauteils 12 mit dem zweiten Bauteil 14 auf den Schaft dieser Schraube eine Mutter aufgeschraubt werden kann. Der Vorteil dieser alternativen Ausgestaltung bestünde darin, dass durch das Vorragen des Schraubenschafts aus dem zweiten Bauelement 26 die Montage bzw. Verbindung des ersten Bauteils 12 an dem zweiten Bauteil 14 erleichtert wird. Sie kann allerdings voraussetzen, dass die überstehenden Schraubenschäfte dann in die Bohrungen der A-Säule eingeführt werden können, bspw. indem an dieser entsprechende Nuten vorhanden sind.

## Patentansprüche

1. Anordnung zum verbinden eines rohrförmigen ersten Bauteils (12) mit einem zweiten Bauteil (14), insbesondere zum Verbinden eines Zugrohrs (16) mit einer A-Säule (18) einer Fahrzeugkarosserie, mit einem eine Aufnahme für ein Schraubelement (24) bildenden ersten Bauelement (22), das an einem dem zweiten Bauteil (14) zugewandten Ende (20) des ersten Bauteils (12) angeordnet ist, **dadurch gekennzeichnet, dass** ein zweites Bauelement (26) vorgesehen ist, das an dem dem zweiten Bauteil (14) zugewandten Ende (20) des ersten Bauteils (12) derart befestigt ist, dass das erste Bauelement (22) zwischen dem ersten Bauteil (12) und dem zweiten Bauelement (26) gehalten ist, wobei das erste Bauelement (22) zwischen dem ersten Bauteil (12) und dem zweiten Bauelement (26) eingeklemmt bzw. eingefasst ist, und wobei das Schraubelement (24) von dem zweiten Bauelement (26) in dem ersten Bauelement (22) unverlierbar gehalten ist, wobei das Schraubelement (24) in dem ersten Bauelement (22) zumindest in einer Richtung quer zu einer Längsrichtung (28) des ersten Bauteils (12) für einen Toleranzausgleich beim Verbinden des ersten Bauteils (12) mit dem zweiten Bauteil (14) beweglich ist.

2. Anordnung nach Anspruch 1, **dadurch gekennzeichnet, dass** das Schraubelement (24) in dem ersten Bauelement (22) in beliebigen Richtungen in einer Ebene quer zur Längsrichtung (28)des ersten Bauteils (12) beweglich ist.

3. Anordnung nach Anspruch 1 oder 2, **dadurch gekennzeichnet, dass** das erste Bauelement (22) von dem zweiten Bauelement (26) im wesentlichen verdrehgesichert an dem ersten Bauteil (12) gehalten ist.

4. Anordnung nach einem der Ansprüche 1 bis 3, **dadurch gekennzeichnet, dass** das erste Bauelement (22) zumindest einen sich quer zur Längsrichtung (28) des ersten Bauteils (12) erstreckenden Flansch (40, 42) aufweist, der stirnseitig auf einem Rand (48) des ersten Bauteils (12) aufliegt und von dem zweiten Bauelement (26) gegen den Rand (48) gehalten ist.

5. Anordnung nach Anspruch 4, **dadurch gekennzeichnet, dass** auf einer dem ersten Bauelement (22) zugewandten Seite (56) des zweiten Bauelements (26) oder an dem Rand (48) des ersten Bauteils (12) eine Ausnehmung (58, 60) vorhanden ist, in der der Flansch (40, 42) des ersten Bauelements (22) aufgenommen ist.

6. Anordnung nach Anspruch 4 oder 5, **dadurch gekennzeichnet, dass** sich der Flansch (40, 42) an dem ersten Bauelement (22) nur teilumfänglich erstreckt.

7. Anordnung nach Anspruch 5, **dadurch gekennzeichnet, dass** sich die Ausnehmung (58, 60) in dem zweiten Bauelement (26) nur teilumfänglich erstreckt.

8. Anordnung nach einem der Ansprüche 4 bis 7, **dadurch gekennzeichnet, dass** das erste Bauelement (22) zumindest zwei sich teilumfänglich erstreckende Flansche (40, 42) aufweist, die in umfangsrichtung voneinander beabstandet sind, vorzugsweise um etwa 180°.

9. Anordnung nach einem der Ansprüche 4 bis 8, **dadurch gekennzeichnet, dass** das erste Bauelement (22) einen sich quer zur Längsrichtung (28) des ersten Bauteils (12) erstreckenden Basisabschnitt (32) aufweist, der in das erste Bauteil (12) eintaucht, wobei sich von dem Basisabschnitt (32) zumindest ein in Längsrichtung (28) des ersten Bauteils (12) zum Ende (20) des ersten Bauteils (12) hin erstreckender Längsabschnitt (36, 38) weg erstreckt, an dessen dem Basisabschnitt (32) gegenüberliegenden Ende der zumindest eine Flansch (40, 42) angeordnet ist.

10. Anordnung nach einem der Ansprüche 1 bis 9, **dadurch gekennzeichnet, dass** das Schraubelement (24) in dem ersten Bauelement (22) verdrehgesichert aufgenommen ist.

11. verfahren zur Herstellung einer Anordnung zum Verbinden eines rohrförmigen ersten Bauteils (12) mit einem zweiten Bauteil (14), insbesondere zum Verbinden eines zugrohrs (16) mit einer A-Säule (18) einer Fahrzeugkarosserie, mit den Schritten:
- Bereitstellen des ersten Bauteils (12);
- Bereitstellen eines eine Aufnahme für ein Schraubelement (24) bildenden ersten Bauelements (22);
- Einlegen des Schraubelements (24) in das erste Bauelement (22);
- Bereitstellen eines zweiten Bauelements (26);
- Anordnen des ersten Bauelements (22) und des zweiten Bauelements (26) an einem dem zweiten Bauteil (14) zugewandten Ende (20) des ersten Bauteils (12);
- Befestigen des zweiten Bauelements (26) an dem dem zweiten Bauteil (14) zugewandten Ende (20) des ersten Bauteils (12) derart, dass das erste Bauelement (22) zwischen dem ersten Bauteil (12) und dem zweiten Bauelement (26) gehalten wird, wobei das erste Bauelement (22) zwischen dem ersten Bauteil (12) und dem zweiten Bauelement (26) eingeklemmt bzw. eingefasst wird, und das Schraubelement (24) von dem zweiten Bauelement (26) in dem ersten Bauelement (22) unverlierbar gehalten wird, wobei das Schraubelement (24) in dem ersten Bauelement (22) zumindest in einer Richtung quer zu einer Längsrichtung (28) des ersten Bauteils (12) für einen Toleranzausgleich beim Verbinden des ersten Bauteils (12) mit dem zweiten Bauteil (14) beweglich ist.

12. verfahren nach Anspruch 11, **dadurch gekennzeichnet, dass** vor dem Befestigen des zweiten Bauelements (26) an dem Ende (20) des ersten Bauteils (12) das erste Bauelement (22) mit zumindest einem Flansch (40, 42) in zumindest einer Ausnehmung (58, 60) des zweiten Bauelements (26) eingelegt wird.

## Claims

1. An arrangement for connecting a tubular first component (12) to a second component (14), in particular for connecting a tensioning tube (16) to an A-pillar (18) of a vehicle body, comprising a first structural element (22) which forms a receptacle for a screw element (24) and is arranged at an end (20) of the first component (12) that faces the second component (14), **characterized in that** a second structural element (26) is provided which is secured in such a manner to that end (20) of the first component (12) which faces the second component (14) that the first structural element (22) is held between the first component (12) and the second structural element (26), wherein the first structural element (22) is clamped or set between the first component (12) and the second structural element (26), and the screw element (24) is held by the second structural element (26) in the first structural element (22) in loss-proof fashion, wherein the screw element (24) is movable in the first structural element (22), at least in a direction transversely with respect to a longitudinal direction (28) of the first component (12), for compensation of tolerances in the connection of the first component (12) to the second component (14).

2. The arrangement of claim 1, **characterized in that** the screw element (24) is movable in the first structural element (22) in any desired directions in a plane transversely with respect to the longitudinal direction (28) of the first component (12).

3. The arrangement of claim 1 or 2, **characterized in that** the first structural element (22) is held by the second structural element (26) on the first component (12) in a manner essentially secured against rotation.

4. The arrangement of anyone of claims 1 through 3, **characterized in that** the first structural element (22) has at least one flange (40, 42) which extends transversely with respect to the longitudinal direction (28) of the first component (12), rests on the end side on an edge (48) of the first component (12) and is held against the edge (48) by the second structural element (26).

5. The arrangement of claim 4, **characterized in that** a recess (58, 60) is present, in which the flange (40, 42) of the first structural element (22) is accommodated, on a side (56) of the second structural element (26) that faces the first structural element (22) or on the edge (48) of the first component (12).

6. The arrangement of claim 4 or 5, **characterized in that** the flange (40, 42) extends only partially around the circumference on the first structural element (22).

7. The arrangement of claim 5, **characterized in that** the recess (58, 60) extends only partially around the circumference in the second structural element (26).

8. The arrangement of anyone of claims 4 through 7, **characterized in that** the first structural element (22) has at least two flanges (40, 42) which extend partially around the circumference and are spaced apart from each other in the circumferential direction, preferably by approximately 180°.

9. The arrangement of anyone of claims 4 through 8, **characterized in that** the first structural element (22) has a base section (32) which extends transversely with respect to the longitudinal direction (28) of the first component (12) and dips into the first component (12), wherein at least one longitudinal section (36, 38) which extends in the longitudinal direction (28) of the first component (12) toward the end (20) of the first component (12) and on its end lying opposite the base section (32) the at least one flange (40, 42) is arranged extends away from the base section (32).

10. The arrangement of anyone of claims 1 through 9, **characterized in that** the screw element (24) is accommodated in the first structural element (22) in a manner secured against rotation.

11. A method for producing an arrangement for connecting a tubular first component (12) to a second component (14), in particular for connecting a tensioning tube (16) to an A-pillar (18) of a vehicle body, comprising the following steps:
- providing the first component (12);
- providing a first structural element (22) forming a receptacle for a screw element (24);
- inserting the screw element (24) into the first structural element (22);
- providing a second structural element (26);
- arranging the first structural element (22) and the second structural element (26) on an end (20) of the first component (12) that faces the second component (14);
- securing the second structural element (26) in such a manner at that end (20) of the first component (12) which faces the second component (14) that the first structural element (22) is held between the first component (12) and the second structural element (26), wherein the first structural element (22) is clamped or set between the first component (12) and the second structural element (26), and the screw element (24) is held by the second structural element (26) in the first structural element (22) in loss-proof fashion, wherein the screw element (24) is movable in the first structural element (22), at least in a direction transversely with respect to a longitudinal direction (28) of the first component (12), for compensation of tolerances in the connection of the first component (12) to the second component (14).

12. The method of claim 11, **characterized in that**, before the second structural element (26) is secured at the end (20) of the first component (12), the first structural element (22) is inserted by means of at least one flange (40, 42) into at least one recess (58, 60) of the second structural element (26).

## Revendications

1. Dispositif destiné à raccorder une première pièce tubulaire (12) à une deuxième pièce (14), en particulier destiné à raccorder un tube de traction (16) à un pied avant (18) d'une carrosserie de véhicule, comportant un premier élément (22), qui forme un logement pour un élément fileté (24) et qui est disposé à l'extrémité (20) de la première pièce (12) orientée vers la deuxième pièce (14), **caractérisé en ce qu'**il est prévu un deuxième élément (26) qui est fixé contre l'extrémité (20) de la première pièce (12), orientée vers la deuxième pièce (14), de telle sorte que le premier élément (22) est maintenu entre la première pièce (12) et le deuxième élément (26), le premier élément (22) étant bloqué ou enserré entre la première pièce (12) et le deuxième élément (26), et l'élément fileté (24) étant maintenu de manière imperdable dans le premier élément (22) par le deuxième élément (26), l'élément fileté (24) étant mobile dans le premier élément (22) au moins dans une direction perpendiculaire à une direction longitudinale (28) de la première pièce (12) en vue de compenser les tolérances lors du raccordement de la première pièce (12) à la deuxième pièce (14).

2. Dispositif selon la revendication 1, **caractérisé en ce que** l'élément fileté (24) est mobile dans le premier élément (22) dans n'importe quelle direction dans un plan perpendiculairement à la direction longitudinale (28) de la première pièce (12).

3. Dispositif selon la revendication 1 ou 2, **caractérisé en ce que** le premier élément (22) est maintenu par le deuxième élément (26) de manière sensiblement immobile en rotation sur la première pièce (12).

4. Dispositif selon l'une quelconque des revendications 1 à 3, **caractérisé en ce que** le premier élément (22) comporte au moins une patte (40, 42) qui est orientée perpendiculairement à la direction longitudinale (28) de la première pièce (12) et qui est en appui du côté frontal sur un bord (48) de la première pièce (12) et est maintenue par le deuxième élément (26) contre le bord (48).

5. Dispositif selon la revendication 4, **caractérisé en ce que**, sur une face (56) du deuxième élément (26), orientée vers le premier élément (22), ou sur le bord (48) de la première pièce (12), est réalisé un évidement (58, 60) dans lequel est logée la patte (40, 42) du premier élément (22).

6. Dispositif selon la revendication 4 ou 5, **caractérisé en ce que** la patte (40, 42) s'étend seulement sur une partie du pourtour du premier élément (22).

7. Dispositif selon la revendication 5, **caractérisé en ce que** l'évidement (58, 60) s'étend seulement sur une partie du pourtour du deuxième élément (26).

8. Dispositif selon l'une quelconque des revendications 4 à 7, **caractérisé en ce que** le premier élément (22) comporte au moins deux pattes (40, 42) qui s'étendent en partie sur le pourtour et qui sont écartées l'une de l'autre dans le sens périphérique, de préférence de 180° environ.

9. Dispositif selon l'une quelconque des revendications 4 à 8, **caractérisé en ce que** le premier élément (22) comporte une partie de base (32) qui s'étend perpendiculairement à la direction longitudinale (28) de la première pièce (12) et qui pénètre dans la première pièce (12), au moins une partie longitudinale (36, 38) étant orientée en s'écartant de la partie de base (32) et en s'étendant dans la direction longitudinale (28) de la première pièce (12) vers l'extrémité (20) de la première pièce (12) et porte sur son extrémité opposée à la partie de base (32) ladite au moins une patte (40, 42).

10. Dispositif selon l'une quelconque des revendications 1 à 9, **caractérisé en ce que** l'élément fileté (24) est logé immobile en rotation dans le premier élément (22).

11. Procédé destiné à la réalisation d'un dispositif pour raccorder une première pièce tubulaire (12) à une deuxième pièce (14), en particulier pour raccorder un tube de traction (16) à un pied avant (18) d'une carrosserie de véhicule, comportant les étapes suivantes :
- mise à disposition de la première pièce (12) ;
- mise à disposition d'un premier élément (22) formant un logement pour un élément fileté (24) ;
- introduction de l'élément fileté (24) dans le premier élément (22) ;
- mise à disposition d'un deuxième élément (26) ;
- agencement du premier élément (22) et du deuxième élément (26) sur la première pièce (12), à savoir son extrémité (20) orientée vers la deuxième pièce (14) ;
- fixation du deuxième élément (26) contre l'extrémité (20) de la première pièce orientée vers la deuxième pièce (14), de telle sorte que le premier élément (22) est maintenu entre la première pièce (12) et le deuxième élément (26), le premier élément (22) étant bloqué ou enserré entre la première pièce (12) et le deuxième élément (26), et l'élément fileté (24) étant maintenu de manière imperdable dans le premier élément (22) par le deuxième élément (26), l'élément fileté (24) étant mobile dans le premier élément (22) au moins dans une direction perpendiculaire à une direction longitudinale (28) de la première pièce (12) en vue de compenser les tolérances lors du raccordement de la première pièce (12) à la deuxième pièce (14).

12. Procédé selon la revendication 11, **caractérisé en ce que**, avant la fixation du deuxième élément (26) contre l'extrémité (20) de la première pièce (12), le premier élément (22) est inséré avec au moins une patte (40, 42) dans au moins un évidement (58, 60) du deuxième élément (26).
